**Europäisches Patentamt**

**European Patent Office**

**Office européen des brevets**

(19)

(11) Publication number : **0 379 759 B1**

# (12) EUROPEAN PATENT SPECIFICATION

(45) Date of publication of patent specification :
05.04.95 Bulletin 95/14

(51) Int. Cl.⁶ : **G05D 23/19, F23N 1/00**

(21) Application number : **89300765.8**

(22) Date of filing : **26.01.89**

(54) **Proportional control valve.**

(43) Date of publication of application :
01.08.90 Bulletin 90/31

(45) Publication of the grant of the patent :
05.04.95 Bulletin 95/14

(84) Designated Contracting States :
**DE FR GB IT**

(56) References cited :
**EP-A- 0 043 256**
**WO-A-85/03761**
**FR-A- 2 552 197**
**FR-A- 2 558 562**
**US-A- 4 434 933**
**PATENT ABSTRACTS OF JAPAN, vol. 8, no. 182 (M-319)[1619], 22nd August 1984; & JP-A-59 73 680 (MATSUSHITA DENKI SANGYO K.K.) 25-04-1984**

(73) Proprietor : **RANCO JAPAN LIMITED**
**7-1, 2-chome, Hirakawa-cho**
**Chiyoda-ku Tokyo (JP)**

(72) Inventor : **Nakatsukasa, Keiichiroh**
**1413-213-201, Nishikawadamachi**
**Utsunomiya-shi Tochigi (JP)**
Inventor : **Kuneguchi, Kenmei**
**1380-7, Nishikawadamachi**
**Utsunomiya-shi Tochigi (JP)**

(74) Representative : **Valentine, Francis Anthony Brinsley et al**
**REDDIE & GROSE**
**16 Theobalds Road**
**London WC1X 8PL (GB)**

## Description

This invention relates to a proportional control valve for a fluid, and in particular, to a proportional control valve for controlling a supply of the gas to gas water heater used for supplying hot water for a bath, a shower, and in a kitchen.

In the gas water heater for supplying hot water for a bath, a shower, and in a kitchen, the control of the water temperature is usually carried out by controlling the water flow rate, i.e., increasing or decreasing same.

In this kind of a gas water heater, however, a problem arises in that, when the water temperature is to be raised, the water flow rate must be reduced, and conversely, when the water temperature is to be lowered, the water flow rate must be increased.

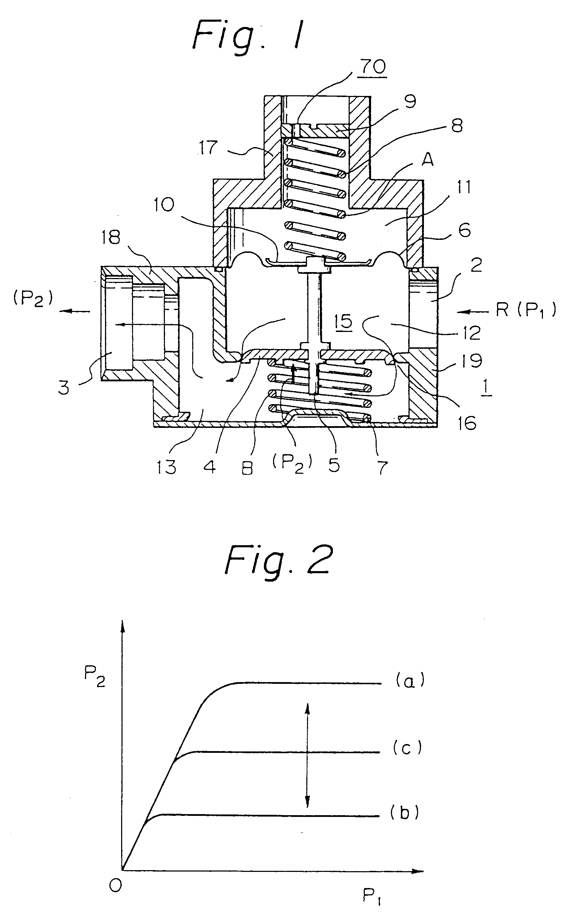

To overcome the above problem, a system for providing hot water at a constant temperature and at a constant rate has been developed. In this system, however, the amount of gas supplied thereto must be controlled by using a proportional control valve, to obtain a desired hot water flow rate while keeping the temperature thereof constant, and further, to control a fluid such as gas, a variable valve such as a governor valve 1 shown in Figure 1 must be used.

Usually this governor valve 1 has a construction such that a valve portion 15 having a flap 4 is provided in a main passage 13 connecting an inlet 2 and an outlet 3 of a fluid R, and a separated chamber 11 is provided on one side of the valve portion 15 facing the direction from which the fluid R is introduced. Further, two separate subchambers are formed inside the separated chamber 11 by providing a diaphragm 6 between a wall portion of the separated chamber 11 and supporting rod 5 mounted on the flap 4 of the valve portion 15 and movable with the flap 4, to cause one of the subchambers formed between the valve portion and the diaphragm to become a part of the main passage for the fluid. The flap 4 is biased upward by a lower spring 7 attached to the bottom portion of the flap 4 and biased downward by an upper spring 8 attached to the upper portion of the supporting rod 5 through the spring receiver 10.

In this construction, when the fluid R is not supplied to this main passage, i.e., a fluid pressure is not applied to the surface of the flap 4, the valve portion 15 is fully open because the spring force A of the spring 8 is larger than that of the spring force B of the spring 7.

When a fluid R having a regulated pressure, i.e., an initial pressure $P_1$ is applied at the entrance 2 of the main passage and the fluid R has an output pressure, i.e., secondary pressure $P_2$ , the flap 4 will be brought to a balanced position as indicated by the following equation,

$$P_2 \text{ x (an effective area of the flap)} = A - B$$

and therefore, a gap 16 is formed between the wall 19 separating the main passage 13 and the flap 4, and the amount of gas passing through the gap 16 is controlled.

In this type of the governor valve, however, the amount of fluid supplied, for example, amount of gas, is set to a constant value when the diameter of a nozzle of a main gas burner is constant.

Namely, when the supply of gas, is to be increased, i.e., the initial pressure $P_1$ thereof is to be increased to raise the temperature of the water, or vice versa, the secondary pressure $P_2$ of the output gas is generally fixed to a certain value, as shown by a curve $\underline{c}$ in Figure 2, because of the spring force applied to the flap 4 of the valve portion 15 by the spring 7 and 8, and thus a precise control as desired can not be obtained.

Accordingly, to solve the above problem, the screw 9 provided at the top of the spring 8 must be adjusted, for example, the force applied to the flap 4 by said spring 8 must be varied, to obtain the variable curves shown by curves $\underline{a}$ and $\underline{b}$ of Figure 2.

In Figure 2, curve $\underline{a}$ shows the curve of the secondary pressure $P_2$ with respect to the initial pressure $P_1$ when a strong force form the spring 8 is applied to the flap 4, and curve $\underline{b}$ shows the curve of the secondary pressure $P_2$ with respect to the initial pressure $P_1$ when the lower pressure of the spring 8 is applied to the flap 4.

Nevertheless, this mechanism is manually operated, and therefore, an adjustment as above simultaneously with a detection of the water temperature is difficult, and the device therefore is complex, and therefore, a precise adjustment is difficult and this system is not satisfactory when controlling the temperature of the water.

In another known system, proposed in an attempt to overcome the problems, a plurality of the ON-0FF type electromagnet valves is utilized and the gas flow supplied thereto is controlled in multisteps.

In this system, however, the adjustment at each valve can be carried out only in such a way that the force applied to the flap of the valve by the spring is varied by an ON-0FF signal generated when a signal is detected which is higher than a predetermined threshold value with respect to the variation of the detected data for, for example, the water temperature.

Accordingly in this system, the operation of the electromagnet values and the adjustment of the force of the spring is varied only in two steps, and therefore, the amount by which the supply of gas can be varied in this system is limited, and thus it is very difficult to precisely adjust the water temperature.

Further, in the prior art, a transformer is widely used to supply an electric current to the electromagnet valves, and this brings to disadvantages of a large size and complex control circuit, and a generation of noise at the electromagnet by an ON-OFF operation thereof.

## SUMMARY OF THE INVENTION

Other known systems for controlling valves electromagnetically are described in International patent application WO 85/03761 and in European patent application EP 0043256.

WO 85/03761 describes a valve having a valve seat against which a valve flap is urged by a spring. A valve stem extends from the flap and forms the armature of an electromagnet which acts on the armature to open the valve and control fluid flow. The valve described is not a proportional control valve of the form shown in Figure 1 herein, no provision being made to use the inlet fluid pressure to reduce or control the valve opening force. In WO 83/03761 a control system provides a pulsed current to the electromagnet, the duty cycle of the activating current varying according to the difference between a control signal and a reference signal in a feedback loop. The valve is therefore operated in an ON/OFF fashion in response to the pulsing of the control signal.

EP 0043256 describes a valve for controlling fluid flow rate in which the position of a valve flap relative to a shaped valve seat or orifice is varied to vary the fluid flow through the valve. The position of the valve flap is controlled by the current in an electromagnet surrounding a valve stem extending directly from the valve flap. An analog control current is used. In use, in order to reduce wear, the valve flap does not contact the valve seat or orifice. The valve is not designed to shut the flow of fluid completely during use but to control the rate of flow. The valve is therefore ill-suited to use with a pulsed or ON-OFF control current.

Pulsed control signals for electrically operated systems are very widely used and provide well-known advantages over analog control systems in many applications, particularly in terms of ease of implementation and accuracy in service. However, in proportional control valves, as mentioned above, the use of pulsed control currents can lead to disadvantages such as generation of noise.

According to the invention there is provided a proportional control valve as defined in claim 1. Preferred features of the invention are defined in the dependent subclaims.

The precharacterising portions of the claims of the application are based on the valve shown in Figure 1 and described in the corresponding text.

The valve according to the invention may advantageously be used for example to control the fuel gas flow to a burner in a gas water heater, the valve opening, and thus the secondary pressure of the gas, being freely and controllably variable in response to the measured temperature of the water from the heater.

In the drawings:

Figure 1 is a cross sectional view of a conventional governor valve;

Figure 2 is a graph showing the relationship of the secondary pressure $P_2$ and the initial pressure $P_1$ of a fluid and a parameter of the spring force of an upper spring when applied to the governor valve;

Figure 3 is a cross sectional view of an embodiment of the proportional control valve according to the present invention;

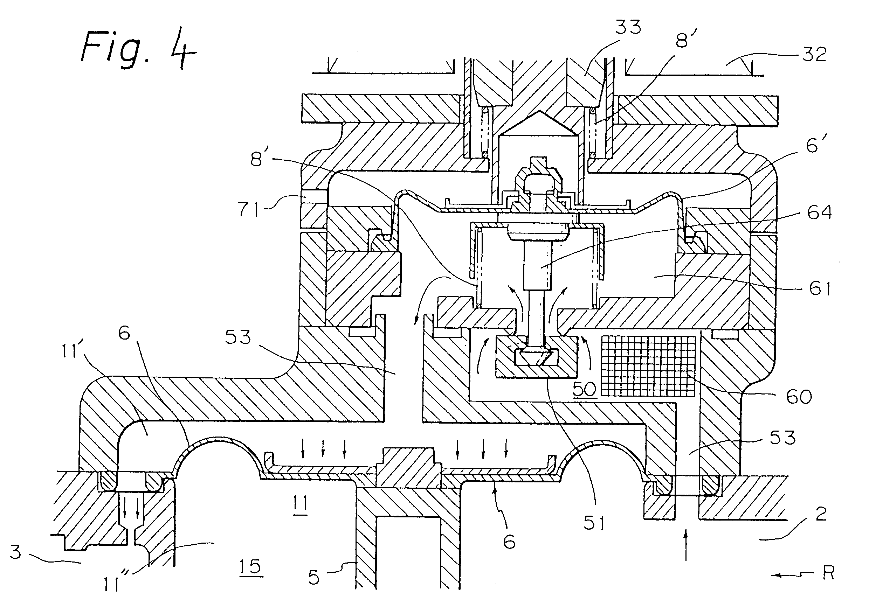

Figure 4 is a partially enlarged cross sectional view of Figure 3 ; and,

Figure 5 shows one example of a pulse wave forms used in this invention.

The preferred embodiments of this invention will be described with reference to the accompanying drawings. These embodiments only exemplify this invention and many variations thereof can be made.

Any fluid such as a liquid or gas can be used in this invention, although preferably a fuel gas is used. Further, the proportional control valve of this invention is not restricted to use in gas water heaters but can be used for any kind of control system in which operation of the device is controlled under predetermined conditions by detecting characteristic data of, for example, an amount of fluid, a temperature of the fluid, and the concentration viscosity, and density of the fluid.

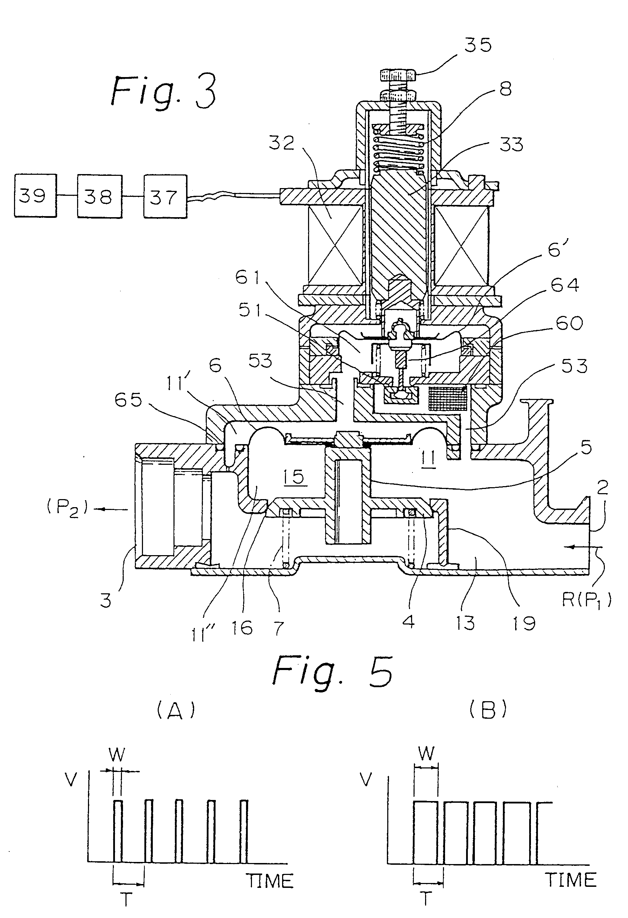

Figure 3 shows an embodiment of the proportional control valve of this invention, in which the proportional control valve is used as a pilot valve and utilizes a pulse wave.

In this embodiment, the proportional control valve comprises, a main fluid passage 13, a valve portion 15 having a flap 4 provided in the main passage 13, a magnetic means 32 disposed in the proximity of the valve portion 15 and mounted integrally in the main passage, and a movable body, disposed inside and actuated by the magnetic means.

This device further comprises a separated chamber 11 provided on one side of the valve portion 15 facing the direction from which the fluid is introduced. Between the valve portion 15 and the magnetic means 32, two separate subchambers 11' and 11" are provided by dividing the separated chamber 11 with a diaphragm 6 extended between a wall portion 19 of the separated chamber 11 and a supporting rod 5 mounted on the flap 4 of the valve portion 15 and movable with the flap 4, to form the subchamber 11" between the valve portion 15 and the diaphragm 6 as a part of the main fluid passage 13.

In this embodiment, the subchamber 11' formed between the diaphragm 6 and the upper wall of the separated chamber 11 is provided with an auxiliary passage 53 connected to a point upstream of the main fluid passage 13 and having an auxiliary valve portion 50 provided therein with an auxiliary valve flap 51 thereof in direct contact or indirect contact with the movable body 33 inside of the magnetic means 32. An electromagnet is used as the magnetic means, and an electric control means 37 connected to a detecting means 39 for detecting characteristic data to be controlled is connected thereto.

In this embodiment, the electric control means supplies a pulse wave to the electromagnet 32 having a duty cycle changed in accordance with the data detected by the detector, whereby the movable body 33 is displaced proportionally in accordance with the detected data, and therefore, the valve flap 51 in the auxiliary valve portion is displaced to change the opening of the valve.

In this invention, a regulating chamber 61 is provided between the auxiliary valve portion 50 and the auxiliary passage 53. The regulating chamber 61 is formed by the internal surface of the auxiliary passage 53 and a diaphragm 6' extended between the top end portion of the supporting rod 64 and the wall portion of the auxiliary passage 53. The top portion of the supporting rod 64 is attached to one end of the movable body 33 through a spring 8', and the other end of the movable body 33 is attached to an adjusting screw 35 through the spring 8. Accordingly, the flap 51 of the auxiliary valve portion 50 is displaced upward or downward by up and down movement of the movable body 33 caused by vibration due to variations of the magnetic flux caused by the different duty cycle of the pulse wave applied to the electromagnet 32 to control the pressure of the fluid flow rate passing through the auxiliary passage 53.

The fluid controlled by the auxiliary valve portion 50 is introduced into the regulating chamber 61, and the vibration of the fluid caused by the flap 51 is absorbed therein.

In this embodiment, the fluid controlled by the auxiliary valve portion and flowing inside the auxiliary passage 53 controls the main fluid flow of the main passage by actuating the diaphragm 6 of the governor valve 31.

In this embodiment, a part of the fluid flow is divided at the front of the entrance portion 2 of the governor valve 31 and made to flow along the auxiliary passage 53 to the auxiliary valve portion 50 through a filter 60, and the output fluid flow controlled by the auxiliary valve portion 50 is made to flow into the subchamber 11' formed on one side of the diaphragm 6 opposite to the side facing the main passage 13.

As explained above, the auxiliary valve having the auxiliary flap, controls the fluid flow rate through the auxiliary passage in proportion to variations in the data detected by the detector, and accordingly, when the valve is being used for example to control fuel gas flow in a water heater, when the temperature of the water is low, the opening of the auxiliary valve portion is increased, and thus more gas is allowed to flow into the subchamber 11' to increase the pressure inside the subchamber 11'. Some of the fluid introduced into the subchamber 11" is output from orifice 65. Therefore, the surface of the flap 6 is subjected to a high pressure and the gap 16 formed between the flap 4 and the separating wall 19 of the main passage 13 is varied to the desired value for controlling the gas flow through the main passage in accordance with the detected data.

When the temperature of the water is high, the above operation is reversed.

In this embodiment, the movable body of the auxiliary valve portion is vibrated by the pulse wave applied thereto, and this vibration is transmitted to the fluid inside the auxiliary passage, although the vibration is ultimately absorbed by the fluid inside the auxiliary passage, and thus is not transmitted to the governor valve.

In a further embodiment, the magnetic means may be a permanent magnet or an electromagnet supplied with a constant voltage or electric current.

As already known, the movable body is supported inside the magnetic means in a balance state by both the upper spring, which forces the flap downward, and the lower spring which forces the flap upward.

In the first embodiment of this invention, the magnetic means consists of an electromagnet connected to an electric control means for controlling the electric voltage or the electric current supplied to the electromagnet.

The electric control means is connected to a detecting means for detecting characteristics data to be controlled, for example, a water temperature detector, a fluid concentration detector, a fluid volume detector or the like, through a suitable electric circuit such as a comparator, an amplifier, an analog-digital convertor or the like.

The analog signal for the characteristic data to be controlled and detected by the detector is transferred to the electric control means directly or after conversion to a digital signal by an A/D convertor, and the signal is compared with a predetermined signal as threshold data to generate a varied electric voltage or current corresponding to the difference between the detected data value and the threshold value, and to supply the voltage or current to the electromagnet.

In another embodiment, the magnetic means may consist of a permanent magnet and a coil means provided on the external surface of the movable body.

In this embodiment, a coil is wound for suitable number of turns on the surface of the movable body and the same electric control means as used in previous embodiment is connected to the coil means.

In each embodiment , when the electric voltage or current is supplied to the coil by the electric control means, the magnetic flux generated inside of the magnet means will be varied and will displace the movable body by a predetermined distance corresponding to the value detected by the detecting means when detecting the characteristic data to be controlled, opposing the spring force applied thereto, and thus the flap of the valve portion or the supporting rod mounted on the flap connected to the movable body is displaced to enable the opening of the valve to be freely varied to a desired width.

Therefore, in these embodiments, by supplying an electric signal corresponding proportionally to variations of the characteristic data to be controlled by the electric control means, the position of the movable body in the magnet means will be changed by the predetermined distance corresponding to the variation of the detected data, and thus the opening of the valve portion is varied in proportion to the variation of the detected data and the control operation can be variably and precisely carried out.

In these embodiments, when the magnetic flux is reduced, the movable body can be moved backward by the spring force always applied thereto. Further, in these embodiments, the movable body may be placed in direct contact with a portion of the flap or the supporting rod of the flap, both of which are a component of the governor valve, or in indirect contact through, for example, a spring or a spring plate, or in indirect contacted with a fluid therebetween.

In this invention, the electric control means for controlling the movable body by actuating the electromagnet, or with a coil means provided on the movable body, is provided and the basic method of this control is that the adjustment of the force applied to the flap by the spring can be made by displacing the position of the movable body by varying the magnetic flux generated inside the magnet means, by supplying an electric voltage or current corresponding to the variation of the detected characteristic data to be controlled to the electromagnet or the coil, to vary the attraction or repelling force therebetween.

The electric control means may be configured in such a manner that the characteristic data signal to be controlled is detected by the detecting means, usually in an analog form, and converted to a digital signal, and a pulse wave voltage preferably having a constant frequency is generated in accordance with the digital signal. The electric control means may be further configured in such a manner that a pulse wave voltage can be generated having a varied duty cycle corresponding to the difference between the detected characteristic data to be controlled and the reference level thereof.

In this invention, the duty cycle is defined as a ratio of the output width W of the pulse to the frequency T of the same (W/T).

Namely, as shown in Figure 5 (A), when a pulse having a small duty cycle W/T is applied to the electromagnet or the coil, the magnetic force applied to the movable body is small, and therefore, the movable body is attracted by the magnet to reduce the opening of the valve portion. On the other hand, as shown in Figure 5 (B), when a pulse having a large duty cycle W/T is applied to the electromagnet or the coil, the magnetic force applied to the movable body is increased, and therefore, the movable body is repelled by the magnet to increase the opening of the valve portion.

Note that, in this invention, since pulse having a different duty cycle corresponding to the variation of the detected characteristic data to be controlled with a constant frequency is generated in accordance with the detected data signal thereof and used for the control, the control operation is carried out easily and a proportional control thereof can be carried out with extreme accuracy and precision.

Usually, the coil used for the proportional control valve used in a low voltage circuit with a direct current requires an electric current of about 200 mA, and therefore, a large sized transformer is required and accordingly space and expense problems arise. Moreover, to obtain a complete direct current, a relatively large size smoothing circuit is required.

By using the proportional control system of this invention utilizing a pulse of 100 V having a different duty cycle, the direct current source having a low voltage is required and a transformer is not required because such a pulse can be obtained from a commercial electric source AC100 V simply through a full wave rectifier circuit and a half wave rectifier circuit.

Therefore, the proportional control valve circuit utilizing a pulse having a different duty cycle can be simplified compared with that of the prior art, and moreover, noise generated from the valve will be completely suppressed.

Where the proportional control valve of this embodiment is used to adjust the fuel gas flow rate in an instantaneous gas water heater providing a constant water flow, the temperature of the water output therefrom is detected by a temperature detector 39 and the analog data thus detected is, for example, converted into digital data by an analog-digital converter 38, and thereafter, is transferred to the electric control means 37 to compare the thus transferred data with a reference data and to output a data signal corresponding to the difference between the detected data and the reference data. Then the signal output from the electric control means is applied to the electromagnet 32 to control the position of the movable body.

When this signal is applied to the magnet 32, the density of the magnet flux is varied by an amount corresponding to the data detected by the detector of the temperature of the water, and thus the repellent force or the attraction force created between the magnet and the movable body is varied to move the movable body 33 to a position at which a new balanced state is created by the magnetic force and spring forces.

In an alternative embodiment, the magnetic means provided on the valve consists of a permanent magnet with a center aperture, a center pole having an adjusting screw inserted in the center aperture and inside of the magnet and outer surface of the center pole. A cylindrical armature, i.e., a bobbin coil, having a coil wound on the surface thereof is provided; the cylindrical armature is made of a non-magnetic material and thus cannot be attracted to the magnet.

The cylindrical armature is supported at a predetermined position by supporting plates having a spring function, and in certain cases, the bottom end thereof is attached to a spring plate mounted at the top end of the supporting rod of the valve.

The end portion of the adjusting screw facing to the governor valve is disposed opposite to the top end of the supporting rod with a suitable space therebetween, to prevent an excessive backward movement thereof.

When a desired current is applied to the coil of the armature, the pressure applied to the valve is adjusted and at that time, the bottom end of the armature comes into contact with the spring plate to push the diaphragm, the flap, and the supporting rod downward.

According to this invention, since the proportional control valve has the construction as explained above, a precise fluid flow control can be easily carried out because the flow rate of the fluid can be continuously and precisely varied in proportion to the variation of the data detected by the detector.

Further, the control circuit of this invention can be simplified, and therefore, the size thereof can be minimized, and moreover, no noise is generated from the control device.

Furthermore, in this invention, when the movable body is indirectly connected to the valve portion, the fine vibration of the movable body caused by the electric voltage or current applied thereto is absorbed bv the fluid or spring, for example, and thus will not have any influence on the opening of the valve portion, and a stable control thereof can be obtained.

**Claims**

1. A proportional control valve comprising a housing defining a main fluid passage (13) having a downstream facing main valve seat at an intermediate point between the fluid inlet and outlet of the proportional control valve, a main valve (15) having a valve flap (4) which is biassed to seat in a closed position on the main valve seat and which when in the closed position divides the main fluid passage into inlet and outlet chambers (11″,3), and a diaphragm (6) extending between a wall of the housing and a valve stem or supporting rod (5) the said stem or rod being mounted on and extending from the valve flap (4) on its upstream side, the said diaphragm bounding a portion of the said inlet chamber (11″), characterised in that the housing further defines an auxiliary chamber (61), a portion of which is bounded by a reverse surface of the diaphragm (6), and an auxiliary passage (53) linking the said inlet chamber (11″) with the said auxiliary chamber, and in that the proportional control valve further comprised an electromagnetically controlled auxiliary valve (50) for controlling fluid pressure in the said auxiliary chamber, which pressure acts on the said diaphragm to provide a biassing force to control the opening of the said valve flap (4) and thus the fluid flow through the said main valve (15).

2. A proportional control valve according to claim 1, in which an orifice (65) links the auxiliary chamber (61) to the outlet chamber (3), and the auxiliary valve controls fluid pressure in the auxiliary chamber by controlling fluid flow from the inlet chamber, through the auxiliary chamber, into the outlet chamber.

3. A proportional control valve according to claim 1 or 2, in which the auxiliary valve (50) comprises an auxiliary valve seat defined by the housing, an auxiliary valve flap (51) arranged to seat on the upstream side of the seat, an auxiliary valve stem or supporting rod (64) mounted on and extending from the downstream side of the flap, and an auxiliary valve diaphragm (6′) extending between the auxiliary valve stem and a wall of the housing, the auxiliary valve diaphragm bounding a portion of the auxiliary chamber, and in which the auxiliary valve further comprises an electromagnetic means for actuating a moveable member (33) coupled either directly or indirectly to the auxiliary valve stem, the auxiliary valve flap opening being electromagnetically controllable in response to an electric control means (37).

4. A proportional control valve according to claim 3, in which the moveable member is resiliently coupled to the auxiliary valve stem.

5. A proportional control valve according to any preceding claim, in which the auxiliary valve is positioned in the auxiliary passage at a point intermediate between its respective openings into the inlet chamber and the auxiliary chamber.

6. A proportional control valve according to claim 3, in which the electric control means is responsive to a detecting means for detecting a characteristic parameter to be controlled.

7. A proportional control valve according to claim 3, in which the electric control means provides a varying voltage or electric current to the electromagnetic means.

8. A proportional control valve according to claim 3, in which the electromagnetic means comprises a coil provided on the moveable member for connection to the electric control means for controlling the movement of the moveable member.

9. A proportional control valve according to claim 3, in which the electromagnetic means comprises an electromagnet (32) fixed relative to the housing.

10. A proportional control valve according to claim 3, in which the electric control means comprises a pulse generating means for generating pulses having a variable duty cycle.

11. A proportional control valve according to claim 10, in which the duty cycle of the control pulses is variable in accordance with an analog value of a characteristic parameter to be controlled.

**Patentansprüche**

1. Proportional-Regelventil mit einem Gehäuse, welches einen Fluidhauptdurchlaß (13) mit einem stromabwärts gerichteten Hauptventilsitz bildet, an einem Punkt zwischen dem Fluideinlaß und -auslaß des Proportional-Regelventils, mit einem Hauptventil (15) mit einer Ventilklappe (4), welche so vorgespannt ist, daß sie in der Schließstellung auf dem Hauptventilsitz ruht, und welche in der Schließstellung den Fluidhauptdurchlaß in Einlaß- und Auslaßkammern (11″,3) teilt, und mit einer Zwischenwand (6), welche sich zwischen einer Wandung des Gehäuses und einem Ventilstößel oder Tragbolzen (5) erstreckt, wobei der Stößel oder Bolzen an der Ventilklappe (4) auf deren Aufstromseite befestigt ist und sich von dieser wegerstreckt, wobei die Zwischenwand einen Teil der Einlaßkammer (11″) begrenzt, dadurch gekennzeichnet, daß das Gehäuse ferner eine Zusatzkammer (61) bildet, von welcher ein Teil durch eine rückseitige Oberfläche der Zwischenwand begrenzt wird, und wobei ein Zusatzdurchlaß (53) die Einlaßkammer (11″) mit der Zusatzkammer verbindet, und daß das Proportional-Regelventil ferner ein elektromagnetisch geregeltes bzw. gesteuertes Zusatzventil (50) zum Regeln bzw. Steuern des Fluiddrucks in der Zusatzkammer umfaßt, wobei dieser Druck auf die Zwischenwand wirkt, um eine Vorspannkraft zum Steuern bzw. Regeln der Öffnung der Ventilklappe und damit des Fluidflusses durch das Hauptventil (15) zu schaffen.

2. Proportional-Regelventil nach Anspruch 1, in welchem eine Öffnung (65) die Zusatzkammer (61) mit der Auslaßkammer (3) verbindet und das Zusatzventil den Fluiddruck in der Zusatzkammer durch Regeln bzw. Steuern des Fluidflusses aus der Einlaßkammer durch die Zusatzkammer in die Auslaßkammer steuert bzw. regelt.

3. Proportional-Regelventil nach Anspruch 1 oder 2, in welchem das Zusatzventil (50) einen Zusatzventilsitz, welcher durch das Gehäuse gebildet wird, eine Zusatzventilklappe (51), welche so angeordnet ist, daß sie auf der Aufstromseite des Sitzes ruht, ein Zusatzventilstößel oder Tragbolzen (64), der auf der Abstromseite der Klappe angeordnet ist und sich von dieser wegerstreckt, und eine Zusatzventilzwischenwand (6′) um£aßt, welche sich zwischen dem Zusatzventilstößel und einer Wandung des Gehäuses erstreckt, wobei die Zusatzventilzwischenwand einen Teil der Zusatzkammer begrenzt, und in welcher das Zusatzventil ferner eine elektromagnetische Vorrichtung zur Betätigung eines beweglichen Elements (33) umfaßt, welche entweder direkt oder indirekt mit dem Zusatzventilstößel gekoppelt ist, wobei die Zusatzventilklappenöffnung elektromagnetisch in Abhängigkeit von einer elektrischen Steuer- oder Regelvorrichtung steuerbar bzw. regelbar.

4. Proportional-Regelventil nach Anspruch 3, bei welchem das bewegliche Element nachgiebig mit dem Zusatzventilstößel verbunden ist.

5. Proportional-Regelventil nach einem der voranstehenden Ansprüche, in welchem das Zusatzventil in dem Zusatzdurchlaß an einer Stelle zwischen den jeweiligen Öffnungen in die Einlaßkammer und die Zusatzkammer angeordnet ist.

6. Proportional-Regelventil nach Anspruch 3, in welchem die elektrische Steuer- bzw. Regelvorrichtung in Abhängigkeit von einem Prüfmittel arbeitet, welches einen charakteristischen, zu steuernden bzw. zu regelnden Parameter überwacht.

7. Proportional-Regelventil nach Anspruch 3, bei welchem die elektrische Steuer- bzw. Regelvorrichtung eine veränderliche Spannung oder veränderlichen elektrischen Strom für die elektromagnetische Vorrichtung bereitstellt.

8. Proprotional-Regelventil nach Anspruch 3, in welchem die elektromagnetische Vorrichtung eine Spule umfaßt, welche auf dem beweglichen Element zur Verbindung mit der elektrischen Steuer- bzw. Regelvorrichtung zum Steuern bzw. Regeln des beweglichen Elements vorgesehen ist.

9. Proportional-Regelventil nach Anspruch 3, bei welchem die elektromagnetische Vorrichtung einen Elektromagneten (32) umfaßt, der gegenüber dem Gehäuse ortsfest ist.

10. Proportional-Regelventil nach Anspruch 3, bei welchem die elektrische Steuer- bzw. Regelvorrichtung eine Pulserzeugungsvorrichtung zur Erzeugung von Pulsen mit veränderlichem Arbeitszyklus umfaßt.

11. Proportional-Regelventil nach Anspruch 10, bei welchem der Arbeitszyklus der Steuer- bzw. Regelpulse in Abhängigkeit von einem Analogwert eines charakteristischen, zu steuernden bzw. zu regelnden Parameters veränderlich ist.

**Revendications**

1. Une soupape de réglage proportionnel, comprenant un corps définissant un passage de fluide principal (13) présentant un siège de soupape principale orienté du côté aval, en un point intermédiaire entre l'entrée et la sortie de fluide de la soupape de réglage proportionnel, une soupape principale (15) présentant un clapet de soupape (4) qui est incliné pour venir se placer en position de fermeture sur le siège de soupape principale et qui, lorsqu'en position de fermeture, divise le passage de fluide principal en des chambres d'entrée et de sortie (11″,3), et une membrane (6) s'étendant entre une paroi du corps et une tige de soupape ou barre de support (5), ladite tige ou barre étant montée sur et s'étendant à partir du clapet de soupape (4) de son côté amont, ladite membrane délimitant une partie de ladite chambre d'entrée (11″), caractérisée en ce que le corps définit, par ailleurs, une chambre auxiliaire (61) dont une partie est délimitée par une surface opposée de la membrane (6), et un passage auxiliaire (53) reliant ladite chambre d'entrée (11″) à ladite chambre auxiliaire, et en ce que la soupape de réglage proportionnel comprend, par ailleurs, une soupape auxiliaire à commande électromagnétique (50) destinée à régler la pression de fluide dans ladite chambre auxiliaire, pression qui agit sur ladite membrane pour fournir la force d'inclinaison pour régler l'ouverture dudit clapet de soupape (4) et donc le flux de fluide à travers ladite soupape principale (15).

2. Soupape de réglage proportionnel suivant la revendication 1, dans laquelle un orifice (65) relie la chambre auxiliaire (61) à la chambre de sortie (3), et la soupape auxiliaire règle la pression de fluide dans la chambre auxiliaire en réglant le flux de fluide de la chambre d'entrée, à travers la chambre auxiliaire, vers la chambre de sortie.

3. Soupape de réglage proportionnel suivant la revendication 1 ou 2, dans laquelle la soupape auxiliaire (50) comprend un siège de soupape auxiliaire défini par le corps, un clapet de soupape auxiliaire (51) disposé pour venir se placer sur le côté amont du siège, une tige de soupape auxiliaire ou barre de support (64) montée sur et s'étendant à partir du côté aval du clapet, et une membrane de soupape auxiliaire (6′) s'étendant entre la tige de soupape auxiliaire et une paroi du corps, la membrane de soupape auxiliaire délimitant une partie de la chambre auxiliaire, et dans laquelle la soupape auxiliaire comprend, par ailleurs, un moyen électromagnétique destiné à actionner un élément mobile (33) couplé soit directement, soit indirectement à la tige de soupape auxiliaire, l'ouverture du clapet de soupape auxiliaire étant réglable électromagnétiquement en réponse à un moyen de commande électrique (37).

4. Soupape de réglage proportionnel suivant la revendication 3, dans la quelle l'élément mobile est couplé de manière résiliente à la tige de soupape auxiliaire.

5. Soupape de réglage proportionnel suivant l'une ou l'autre des revendications précédentes, dans laquelle la soupape auxiliaire est positionnée dans le passage auxiliaire, à un point intermédiaire entre ses ouvertures respectives donnant dans la chambre d'entrée et la chambre auxiliaire.

6. Soupape de réglage proportionnel suivant la revendication 3, dans laquelle le moyen de commande électrique réagit à un moyen capteur destiné à capter un paramètre caractéristique à régler.

7. Soupape de réglage proportionnel suivant la revendication 3, dans laquelle le moyen de commande électrique fournit une tension ou un courant électrique variable au moyen électromagnétique.

8. Soupape de réglage proportionnel suivant la revendication 3, dans laquelle le moyen électromagnétique comprend une bobine prévue sur l'élément mobile, destinée à être connectée au moyen de commande électrique pour la commande du déplacement de l'élément mobile.

9. Soupape de réglage proportionnel suivant la revendication 3, dans laquelle le moyen électromagnétique comprend un électro-aimant (32) fixé par rapport au corps.

**10.** Soupape de réglage proportionnel suivant la revendication 3, dans laquelle le moyen de commande électrique comprend un moyen générateur d'impulsions destiné à générer des impulsions ayant un cycle de travail variable.

**11.** Soupape de commande proportionnel suivant la revendication 10, dans laquelle le cycle de travail des impulsions de commande est variable selon une valeur analogique d'un paramètre caractéristique à régler.

# Fig. 1

# Fig. 2

# Fig. 3

# Fig. 5

(A)

(B)

Fig. 4

EP 0 379 759 B1